# EUROPÄISCHE PATENTSCHRIFT

(11) **EP 4 062 748 B1**
(45) Veröffentlichungstag und Bekanntmachung des Hinweises auf die Patenterteilung: **28.01.2026**
(21) Anmeldenummer: 21164918.1
(22) Anmeldetag: 25.03.2021
(51) Int. Cl.: A01G 9/02, A01G 9/029, A01G 9/04, A01G 27/00, A01G 31/06

(54) **FLÜSSIGKEITSVERSORGUNG EINES BLOCKLAGERELEMENTES**
FLUID SUPPLY FOR A BLOCK STORAGE ELEMENT
ALIMENTATION EN LIQUIDE D'UN ÉLÉMENT D'ENTREPOSAGE EN BLOCS

(43) Veröffentlichungstag der Anmeldung: 28.09.2022
(73) Patentinhaber: Jungheinrich Aktiengesellschaft, 22047 Hamburg (DE)
(72) Erfinder: Cavelius, Jörg, 61118 Bad Vilbel (DE); Rollwa, Volker, 66953 Pirmasens (DE); Liebhaber, Markus, 61440 Oberursel (DE)
(74) Vertreter: Keil & Schaafhausen Patentanwälte PartGmbB

(56) Entgegenhaltungen:
- EP-A1- 1 031 276
- FR-A1- 2 382 850
- FR-A1- 2 761 574
- FR-A1- 2 761 575
- FR-A2- 2 461 449

## Beschreibung

Die vorliegende Erfindung betrifft ein Verfahren zur Flüssigkeitsversorgung eines Blocklagerelementes, wobei das Blocklagerelement einen Überlauf aufweist.

Weiterhin betrifft die Erfindung ein Blocklagerelement mit einem Wannenbereich und einem Überlauf.

FR 2 461 449 A2 beschreibt ein System mit einem Tank, dessen Boden zwei Überauslasse verfügt. Jeder Auslass ist mit einem Fortsatz in Form einer Buchse versehen, die in eine Öffnung des Bodens eingesetzt ist. Die Buchsen sind austauschbar und ihre Höhe steuert den Flüssigkeitsüberlauf. Die Buchse kann weiterhin in einem Rohr angeordnet sein, wobei das Rohr eine Öffnung aufweist, wodurch ein Inneres des Rohrs mit einem Inneren des Tanks kommunizieren kann.

FR 2 382 850 A1 beschreibt eine Hydrokulturschale. Dabei werden Wurzeln in einen Tank gesetzt, der mit sauerstoffhaltiger Nährlösung durch einen oder mehrere Versorgungsschläuche versorgt wird. Nach der Bewässerung fließt die Nährlösung durch Überläufe in den Füßen der Tankträger in einen Kanal. Mittels einer Pumpe wird die Nährlösung wieder in den unter Druck stehenden Kreislauf eingeführt.

FR 2 761 574 A1 beschreibt einen Trog, der eine Wachstumszone umfasst. Ein Kanal ist außerhalb einer Wachstumszone zum Ableiten überschüssiger Nährlösung vorgesehen und mit einem Überlauf verbunden.

Blocklagerelemente gemäß der vorliegenden Erfindung werden beispielsweise in Blocklagern oder Blocklageranordnungen in Gewächshausanordnungen benutzt. Bisherige Blocklagerelemente werden von außen mit Flüssigkeit oder einer Nährstofflösung versorgt, so dass in diesen Blocklagerelementen Pflanzen wachsen können. Dazu wird beispielsweise in jedem Blocklagerelement der Flüssigkeitsspiegel überwacht und mittels einer Steuerung des Zulaufes und/ oder des Ablaufes an einen Sollwert angepasst. Dies erfordert eine Vielzahl von Komponenten, wie Ventile, und außerdem eine ausgeklügelte Steuerung.

Aufgabe der vorliegenden Erfindung ist es, die Flüssigkeitsversorgung und Nährstoffversorgung eines Blocklagerelementes einfach zu gestalten.

Die Aufgabe wird durch ein Verfahren gemäß der Merkmale des Anspruchs 1 und durch ein Blocklagerelement mit den Merkmalen des Anspruchs 6 gelöst.

Ein Blocklager bzw. eine Blocklageranordnung beschreibt eine Lageranordnung mit wenigstens einem Blocklagerelementaufnahmeraum. In dem Blocklagerelementaufnahmeraum können stapelbare Blocklagerelemente ein- und ausgelagert werden. Dafür wird wenigstens ein Blocklagerelement durch einen Beschickungsraum in den Blocklagerelementaufnahmeraum ein- oder ausgelagert. Der Beschickungsraum kann in Schwerkraftrichtung oberhalb oder unterhalb des Blocklagerelementaufnahmeraumes angeordnet sein, so dass eine Ein- und Auslagerrichtung in Schwerkraftrichtung oder entgegen der Schwerkraftrichtung orientiert ist. Die Ein- und Auslagerrichtung wird durch die Anordnung des Beschickungsraums festgelegt. Ist der Beschickungsraum oberhalb des Blocklagerelementaufnahmeraumes angeordnet, so ist die Einlagerrichtung in Schwerkraftrichtung und die Auslagerrichtung entgegen der Schwerkraftrichtung. Ist der Beschickungsraum in Schwerkraftrichtung unterhalb des Blocklagerelementaufnahmeraumes angeordnet, so ist die Einlagerrichtung entgegen der Schwerkraftrichtung orientiert und die Auslagerrichtung in der Schwerkraftrichtung ausgerichtet. Werden mehrere Blocklagerelemente in dem Blocklagerelementaufnahmeraum eingelagert, entsteht ein Blocklagerelementstapel. In der nachfolgenden Erläuterung ist der Blocklagerelementaufnahmeraum in Schwerkraftrichtung unterhalb des Beschickungsraums angeordnet.

Bei dem Verfahren der eingangs genannten Art wird Flüssigkeit über einen Überlaufverteiler mit einer Verteilerbegrenzung eingeleitet, wobei die Flüssigkeit durch wenigstens einen in der Verteilerbegrenzung angeordneten Durchgang gedrosselt in einen Wannenbereich des Blocklagerelements gelangt, und die Flüssigkeit, die nicht durch den wenigstens einen Durchgang abgeführt wird, durch den Überlauf abgeleitet wird.

Die Flüssigkeit wird in den Überlaufverteiler eingebracht, der durch eine Verteilerbegrenzung von dem Wannenbereich des Blocklagerelementes abgetrennt ist. Innerhalb des Überlaufverteilers ist weiterhin der Überlauf angeordnet. Die in den Überlaufverteiler eingebrachte Flüssigkeit gelangt durch den wenigstens einen Durchgang, im Folgenden Durchgang genannt, in den Wannenbereich, wobei der Durchgang die Menge der einzubringenden Flüssigkeit drosselt. Dadurch steigt innerhalb des Überlaufverteilers der Flüssigkeitsspiegel, der, sobald ein oberes Ende des Überlaufs erreicht wurde, durch den Überlauf abgeführt wird. Durch diese Anordnung kommt die Flüssigkeitsversorgung des Blocklagerelements ohne jegliche Ventile oder elektronische Steuerung aus.

Das wiederum vereinfacht die Montage, die Steuerung, die Installation und die Wartungsfreundlichkeit des Blocklagerelementes.

Erfindungsgemäß ist eine Querschnittsfläche des Durchgangs an eine Querschnittsfläche des Überlaufs angepasst.

Dabei bezieht sich die Querschnittsfläche des Durchgangs auf die Gesamtquerschnittsfläche alle Durchgänge. Dazu kann der Durchgang durch mehrere Durchgänge gebildet werden. Durch die Aufspaltung des Durchgangs in mehrere Durchgänge kann die durchzulassende Flüssigkeitsmenge an eine gewünschte Drosselung angepasst werden. Weiterhin kann dadurch die Drosselung und somit die Flüssigkeitsversorgung des Wannenbereichs fein eingestellt werden.

Flüssigkeit, die nicht durch den Durchgang in den Wannenbereich geleitet wird, verbleibt in dem Überlaufverteiler, bis der Flüssigkeitsspiegel das obere Ende des Überlaufs übersteigt. Sobald der Flüssigkeitsspiegel über das obere Ende des Überlaufs steigt, wird Flüssigkeit über den Überlauf abgeleitet. Dadurch entsteht ein System, das eine genaue und zielgerichtete Flüssigkeitsversorgung des Wannenbereichs des Blocklagerelements ermöglicht. Weiterhin wird nicht benötigte Flüssigkeit frühzeitig aus dem Blocklagerelement abgeleitet, so dass eine Vermischung dieser Flüssigkeit durch Berührung mit dem Inneren des Wannenbereichs vermieden wird, sodass weiterhin eine Aufbereitung der frühzeitig abgeleiteten Flüssigkeitsmenge vermieden wird. Dies reduziert die aufzubereitende Flüssigkeitsmenge.

Vorzugsweise wird die durch den Überlauf abgeleitete Flüssigkeit eines ersten Blocklagerelementes in eine Flüssigkeitsführung eines unterhalb des ersten Blocklagerelementes angeordnetes zweites Blocklagerelementes geleitet. Durch diese Anordnung kann ein Blocklagerelementstapel, bestehend aus wenigstens zwei Blocklagerelementen, durch die Einleitung von Flüssigkeit in das erste Blocklagerelement versorgt werden. Dazu wird Flüssigkeit in den Überlaufverteiler des ersten Blocklagerelementes eingeleitet, wobei ein Teil der Flüssigkeit durch den Durchgang in den Wannenbereich des ersten Blocklagerelementes gelangt. Der restliche Teil der eingeleiteten Flüssigkeit wird über den Überlauf des Überlaufverteilers des ersten Blocklagerelementes in die Flüssigkeitsführung des zweiten Blocklagerelementes eingeleitet. Die Flüssigkeitsführung des zweiten Blocklagerelementes leitet die Flüssigkeit in einen Überlaufverteiler des zweiten Blocklagerelementes, von wo aus ein Teil der eingeleiteten Flüssigkeit durch den Durchgang des Überlaufverteilers in den Wannenbereich des zweiten Blocklagerelementes eingeführt wird. Somit wird das zweite Blocklagerelement bzw. dessen Wannenbereich mit Flüssigkeit versorgt. Durch diese Anordnung kann auf Ventile und deren Steuerung verzichtet werden, so dass die Anordnung kostengünstig ist.

Beispielsweise ist die Flüssigkeitsführung als Trichter ausgeführt, so dass eine ungenaue Positionierung des ersten Blocklagerelementes relativ zu dem zweiten Blocklagerelement keinen Einfluss auf die Überführung von Flüssigkeit von dem Überlauf des ersten Blocklagerelementes in die Flüssigkeitsführung des zweiten Blocklagerelementes hat. Auch können durch diese Anordnung Fertigungstoleranzen und Montageungenauigkeiten ausgeglichen werden.

Vorzugsweise ist der Überlauf ein erster Überlauf, und die von dem Überlaufverteiler aus in das Blocklagerelement eingebrachte Flüssigkeit wird durch einen zweiten Einlass eines zweiten Überlaufs eines Überlaufsammlers abgeführt. Der erste Überlauf führt frische Flüssigkeit ab, die noch nicht in Kontakt mit dem Wannenbereich des Blocklagerelementes war, wobei der zweite Überlauf Flüssigkeit aus dem Wannenbereich ableitet. Durch diese Anordnung bleibt ein definierter Flüssigkeitsspiegel im Inneren des Wannenbereichs bestehen, auch wenn weiter Flüssigkeit eingeleitet wird. Dadurch ist das Lagergut, was beispielsweise aus Pflanzen, Setzlingen, Samen, Pilzen oder sonstigem biologischen Material besteht, stets mit ausreichend Flüssigkeit versorgt. Außerdem fließt die Flüssigkeit beispielsweise ausgehend von dem Überlaufverteiler zu dem zweiten Überlauf. Dadurch werden alle Bereiche des Wannenbereichs mit Flüssigkeit versorgt, so dass die Flüssigkeit gleichmäßig appliziert wird.

Vorzugsweise wird die durch den zweiten Überlauf abgeleitete Flüssigkeit eines ersten Blocklagerelementes in eine zweite Flüssigkeitsführung eines unterhalb des ersten Blocklagerelementes angeordnetes zweites Blocklagerelementes geleitet. Durch die Überführung der abgeleiteten Flüssigkeiten des ersten Blocklagerelementes in die zweite Flüssigkeitsführung des zweiten Blocklagerelementes wird eine ungewollte Vermischung von frischer Flüssigkeit und abgeleiteter Flüssigkeit vermieden. Dadurch wird der Wannenbereich mit stets frischer Flüssigkeit versorgt.

Vorzugsweise wird die durch den zweiten Überlauf des ersten Blocklagerelementes in die zweite Flüssigkeitsführung des unter dem ersten Blocklagerelement angeordneten zweiten Blocklagerelements eingeleitete Flüssigkeit durch einen ersten Einlass des zweiten Überlaufs in ein drittes Blocklagerelement überführt, das in Schwerkraftrichtung unterhalb des zweiten Blocklagerelementes angeordnet ist. Durch diese Anordnung wird verbrauchte Flüssigkeit von dem ersten Blocklagerelement abgeleitet, ohne dass die verbrauchte Flüssigkeit in einen Wannenbereich des zweiten oder dritten Blocklagerelementes gelangt. Der Zulauf von frischer Flüssigkeit und der Ablauf von verbrauchter Flüssigkeit sind also getrennt voneinander angeordnet.

Weiterhin wird die oben genannte Aufgabe durch die Merkmale des Anspruchs 6 gelöst. Dabei ist ein Überlauf in einem Überlaufverteiler angeordnet, wobei der Überlaufverteiler eine Verteilerbegrenzung mit wenigstens einem Durchgang zu dem Wannenbereich aufweist, wobei ein erster Querschnitt des wenigstens einen Durchgangs im Wesentlichen geringer ist als ein zweiter Querschnitt des Überlaufs. Dabei kann der Durchgang beispielsweise auch mehrere voneinander getrennte Durchgänge aufweisen. Die Summe der einzelnen Querschnitte der Durchgänge bilden den ersten Querschnitt.

Der Überlauf ist durch die Verteilerbegrenzung von dem Wannenbereich abgetrennt. In einem Bereich um den Überlauf wird Flüssigkeit eingebracht, wobei die eingebrachte Flüssigkeitsmenge beispielsweise größer ist als die Flüssigkeitsmenge, die durch den Durchgang in den Wannenbereich gelangt. Dabei führt Flüssigkeit, die nicht durch den Durchgang abgeleitet wird, zu einem Steigen des Flüssigkeitsspiegels innerhalb des Überlaufverteilers. Sobald der Flüssigkeitsspiegel über ein in Schwerkraftrichtung oberes Ende des Überlaufs steigt, wird Flüssigkeit über den Überlauf abgeleitet. Dies ermöglicht eine Steuerung und/oder Regelung des Flüssigkeitsspiegels ohne bewegbare Elemente, so dass ein Wartungsaufwand verringert werden kann.

Vorzugsweise ist der wenigstens eine Durchgang in Schwerkraftrichtung zumindest teilweise auf Höhe eines oberen Endes des Überlaufs und/oder in Schwerkraftrichtung zumindest teilweise unterhalb des oberen Endes des Überlaufs angeordnet. Durch diese Anordnung wird sichergestellt, dass zumindest ein Teil der Flüssigkeit aus dem Überlaufverteiler durch den wenigstens einen Durchgang in das Wanneninnere gelangt. Weiterhin kann beispielsweise durch eine Anpassung einer Durchgangsgeometrie die Drosselung der Flüssigkeit abhängig vom Flüssigkeitsspiegels angepasst werden.

Vorzugsweise ist der Überlaufverteiler in einem Eckbereich des Wannenbereichs des Blocklagerelementes angeordnet. Durch die Anordnung des Überlaufverteilers in einem Eckbereich ist ein Inneres des Wannenbereiches des Blocklagerelementes weiterhin von allen Seiten zugänglich. Dies erlaubt eine einfache Handhabung, Entnahme und Einlagerung von Lagergut aus und in dem Wannenbereich des Blocklagerelementes.

Vorzugsweise weist der Überlaufverteiler eine Flüssigkeitsführung auf, deren unteres Ende in Schwerkraftrichtung unterhalb des oberen Endes des Überlaufs angeordnet ist. Dadurch, dass das untere Ende der Flüssigkeitsführung in Schwerkraftrichtung unterhalb des oberen Endes des Überlaufs angeordnet ist, wird Flüssigkeit unterhalb des oberen Endes des Überlaufs in den Überlaufverteiler eingeführt. Dadurch wird verhindert, dass Flüssigkeit direkt aus der Flüssigkeitsführung in den Überlauf gelangt. So muss der Flüssigkeitsspiegel innerhalb des Überlaufverteilers erst ansteigen, bis Flüssigkeit über den Überlauf abgeleitet wird. Dadurch werden eine gezielte Flüssigkeitsversorgung und Weiterleitung möglich.

Vorzugsweise ist der Überlauf ein erster Überlauf, und das Blocklagerelement weist einen zweiten Überlauf mit einem ersten Einlass und einem zweiten Einlass auf, wobei der erste Einlass mit dem Inneren eines Überlaufsammlers zusammenwirkt und der zweite Einlass mit einem Äußeren des Überlaufsammlers zusammenwirkt. Das Äußere des Überlaufsammlers ist beispielsweise der Wannenbereich. Der zweite Einlass kann dabei wenigstens teilweise im Wannenbereich angeordnet sein. Der erste Einlass wird räumlich von dem Wannenbereich getrennt. Dadurch kann Flüssigkeit von dem Wannenbereich durch den zweiten Einlass abgeführt werden, wobei der erste Einlass lediglich zum Ableiten von Flüssigkeit dient, die in das Innere des Überlaufsammlers eingeführt wird. Durch diese Anordnung wird verbrauchte Flüssigkeit, die ausgehend von dem Überlaufverteiler durch den Wannenbereich hin zu dem Überlaufsammler geleitet wird, nicht erneut mit frischer Flüssigkeit vermischt. Vielmehr wird verbrauchte Flüssigkeit gezielt abgeleitet.

Vorzugsweise ist die Flüssigkeitsführung eine erste Flüssigkeitsführung, und eine zweite Flüssigkeitsführung wirkt mit dem Inneren des Überlaufsammlers zusammen. Durch die zweite Flüssigkeitsführung wird durch den zweiten Überlauf abgeleitete verbrauchte Flüssigkeit in den Überlaufsammler eingeleitet. Dadurch wird beispielsweise ein Spritzen oder Plätschern der verbrauchten Flüssigkeit verhindert, so dass eine Vermengung der verbrauchten Flüssigkeit mit in dem Wannenbereich befindlicher Flüssigkeit vermieden wird. Außerdem wird durch die zweite Flüssigkeitsführung eine Verschmutzung durch verbrauchte Flüssigkeit des Umfeldes des Blocklagerelementes vermieden.

Vorzugsweise ist der zweite Einlass in Schwerkraftrichtung oberhalb des ersten Einlasses angeordnet. Durch diese Anordnung wird durch die zweite Flüssigkeitsführung eingeführte Flüssigkeit in den ersten Einlass eingeführt, ohne dass die Gefahr besteht, dass die durch die zweite Flüssigkeitsführung eingeführte Flüssigkeit in den Wannenbereich gelangt. Vielmehr wird die Flüssigkeit, die durch die zweite Flüssigkeitsführung eingeführt ist, direkt durch den zweiten Überlauf abgeleitet. Das ermöglicht eine einfache Ableitung der verbrauchten Flüssigkeit.

Vorzugsweise liegt ein in Schwerkraftrichtung oberes Ende des ersten Einlasses auf gleicher Höhe wie der Boden des Überlaufsammlers. Dadurch wird die Gefahr des Überschwappens der durch die zweite Flüssigkeitsführung eingeführten Flüssigkeit in den Wannenbereich weiter vermieden. Außerdem bleibt bei dieser Anordnung nur eine geringe Menge der eingebrachten Flüssigkeit in dem Überlaufsammler zurück. Diese geringe Menge bietet keine ausreichende Grundlage für die Vermehrung ungewollter Insekten, Pilze oder sonstigem biologischem Materials, die zur Störung des Betriebsablaufes führen könnte. Dadurch werden die Benutzungsfreundlichkeit und Reinigungsfreundlichkeit des Blocklagerelementes verbessert.

Vorzugsweise ist der Eckbereich ein erster Eckbereich, wobei der Überlaufsammler mit dem zweiten Überlauf in einem zweiten Eckbereich angeordnet ist, der sich vom ersten Eckbereich unterscheidet. Dadurch wird erreicht, dass durch den Überlaufverteiler eingebrachte Flüssigkeit zunächst den Wannenbereich durchlaufen muss, bevor die Flüssigkeit durch den Überlaufsammler abgeleitet werden kann. Dadurch wird der Wannenbereich gleichmäßig geflutet, so dass alle im Wannenbereich angeordneten Elemente mit Flüssigkeit versorgt und umspült werden.

Vorzugsweise ist ein erstes Blocklagerelement in Schwerkraftrichtung oberhalb eines zweiten Blocklagerelementes angeordnet, wobei der erste Überlauf des Blocklagerelementes oberhalb der ersten Flüssigkeitsführung des zweiten Blocklagerelementes angeordnet ist und/oder der zweite Überlauf des ersten Blocklagerelementes oberhalb der zweiten Flüssigkeitsführung des zweiten Blocklagerelementes angeordnet ist. Gemäß dieser Anordnung interagieren beispielsweise der erste Überlauf des ersten Blocklagerelementes mit der ersten Flüssigkeitsführung des zweiten Blocklagerelementes. Weiterhin interagieren beispielsweise der zweite Überlauf des ersten Blocklagerelementes mit der zweiten Flüssigkeitsführung des zweiten Blocklagerelementes.

Dabei kommt der erste Überlauf und die erste Flüssigkeitsführung stets mit frischer Flüssigkeit in Kontakt, so dass, ausgehend von dem Überlaufverteiler, der Wannenbereich mit frischer Flüssigkeit versorgt wird.

Der zweite Überlauf und die zweite Flüssigkeitsführung händeln die verbrauchte Flüssigkeit, die ausgehend von dem Wannenbereich in den zweiten Überlauf eingeleitet wird.

Durch die beiden Anordnungen ist die frische Flüssigkeit von der verbrauchten Flüssigkeit getrennt. Dadurch kann sichergestellt werden, dass der Wannenbereich mit frischer Flüssigkeit versorgt wird, die nicht mit verbrauchter Flüssigkeit vermischt wird.

Blocklagerelemente werden beispielsweise in einem Blocklager eingelagert. Dabei bilden wenigstens zwei Blocklagerelemente einen Blocklagerelementstapel. Frische Flüssigkeit wird beispielsweise durch die erste Flüssigkeitsführung des ersten, obersten Blocklagerelementes eingeleitet. Durch die erste Flüssigkeitsführung wird die Flüssigkeit in den Überlaufverteiler des ersten Blocklagerelementes eingebracht. Von dort aus gelangt ein Teil der Flüssigkeit in den Wannenbereich. Der verbleibende Teil der eingebrachten Flüssigkeit verbleibt in dem Überlaufverteiler, so dass der Flüssigkeitsspiegel innerhalb des Überlaufverteilers des ersten Blocklagerelementes steigt, bis die Flüssigkeit durch den ersten Überlauf abgeleitet wird. Von dort aus gelangt die Flüssigkeit durch die erste Flüssigkeitsführung eines zweiten Blocklagerelementes in den Überlaufverteiler des zweiten Blocklagerelementes. Dabei ist das zweite Blocklagerelement unterhalb des ersten Blocklagerelementes angeordnet. Dort wiederholt sich der Vorgang, so dass bei dem zweiten Blocklagerelement der Wannenbereich geflutet wird und überschüssige Flüssigkeit durch den ersten Überlauf abgeleitet wird.

In dem im vorigen Absatz beschriebenen Blocklagerelementstapel breitet sich im ersten Blocklagerelement in dem Wannenbereich die Flüssigkeit aus. Dort steigt der Flüssigkeitsspiegel, bis die Flüssigkeit über den zweiten Einlass des zweiten Überlaufs abgeleitet wird. Von dort aus gelangt die abgeleitete Flüssigkeit in die zweite Flüssigkeitsführung des zweiten Blocklagerelementes. Die zweite Flüssigkeitsführung überführt die abgeleitete Flüssigkeit in ein Inneres des Überlaufsammlers, wobei die abgeleitete Flüssigkeit ausgehend von dem Inneren des Überlaufsammlers, direkt durch den ersten Einlass des zweiten Überlaufs weiterhin abgeleitet wird.

Diese kaskadenartige Versorgung der einzelnen Blocklagerelemente mit Flüssigkeit kann auf einen beliebig großen Blocklagerelementstapel angewandt werden. Dabei kommt die Anordnung des Überlaufsammlers und des Überlaufverteilers in Kombination mit der jeweiligen Flüssigkeitsführung ohne bewegliche Teile aus. Dies führt zu einer guten Wartungsfreundlichkeit.

Die Erfindung wird im Folgenden anhand eines bevorzugten Ausführungsbeispiels in Verbindung mit der Zeichnung beschrieben. Hierin zeigen:
- Fig. 1: ein Blocklagerelement;
- Fig. 2: eine geschnittene Detailansicht des Überlaufverteilers;
- Fig. 3: eine geschnittene Detailansicht des Überlaufsammlers;
- Fig. 4: eine Detailansicht des zweiten Überlaufs.

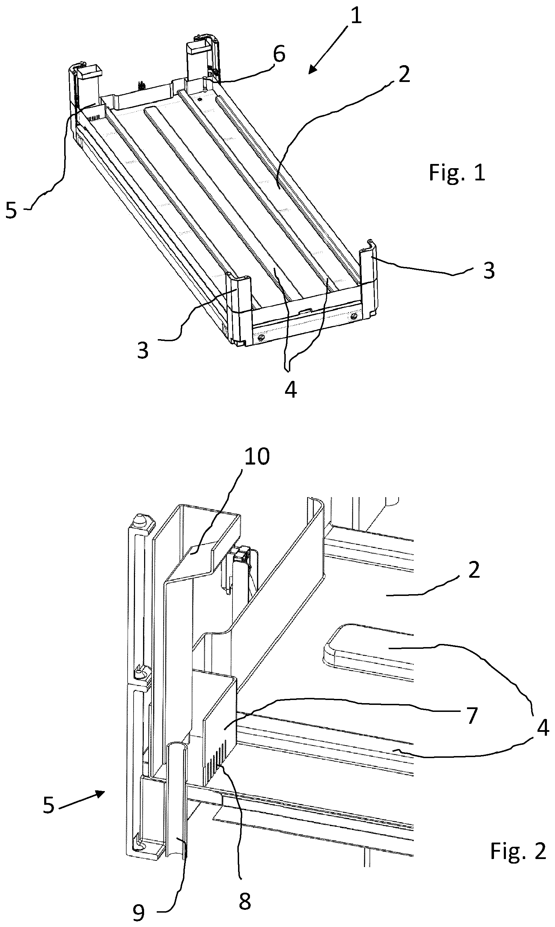

Das in Fig. 1 dargestellte Blocklagerelement 1 weist einen Wannenbereich 2 und Stapelgeometrien 3 auf. In dem Wannenbereich 2 sind Verteilelemente 4 vorgesehen. In einem ersten Eckbereich des Blocklagerelementes 1 ist ein Überlaufverteiler 5 vorgesehen. In einem zweiten Eckbereich des Blocklagerelementes 1 ist ein Überlaufsammler 6 vorgesehen.

In Fig. 2 ist der Überlaufverteiler 5 geschnitten dargestellt. Der Überlaufverteiler 5 weist eine Verteilerbegrenzung 7 mit mehreren Durchgängen 8 auf. Die Verteilerbegrenzung 7 grenzt einen Bereich um einen ersten Überlauf 9 von dem Wannenbereich 2 ab. In dem Bereich um den ersten Überlauf mündet eine erste Flüssigkeitsführung 10. Dabei ist ein in Schwerkraftrichtung unteres Ende der Flüssigkeitsführung 10 unterhalb eines oberen Endes des ersten Überlaufs 9 angeordnet. Die erste Flüssigkeitsführung 10 weist weiterhin eine trichterförmige Form auf, wobei ein Trichtereinlass in Schwerkraftrichtung oberhalb des ersten Überlaufs 9 angeordnet ist. Die Durchgänge 8 verbinden den Bereich um den ersten Überlauf 9, auch Inneres des Überlaufverteilers 5 genannt, mit dem Wannenbereich 2. Durch die Durchbgänge 8 gelangt Flüssigkeit ausgehend von dem Inneren des Überlaufverteilers 5 in den Wannenbereich 2. In dem Wannenbereich 2 wird die Flüssigkeit durch Verteilelemente 4 geleitet.

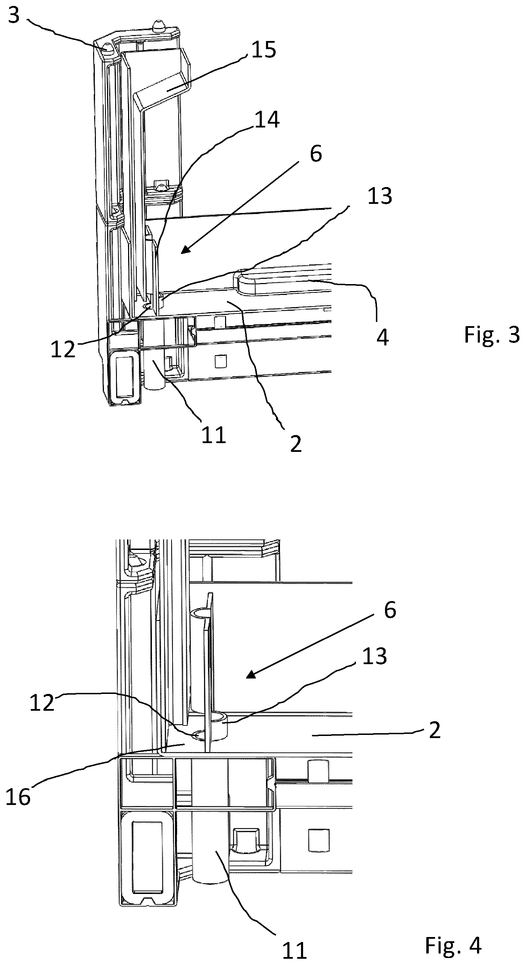

In Fig. 3 ist eine geschnittene Detailansicht des Überlaufsammlers 6 dargestellt. Der Überlaufsammler 6 weist einen zweiten Überlauf 11 mit einem ersten Einlass 12 und einem zweiten Einlass 13 auf, wobei die beiden Einlässe 12, 13 durch eine Begrenzung 14 voneinander getrennt sind. Weiterhin ist eine zweite Flüssigkeitsführung 15 vorgesehen.

Fig. 4 zeigt die Anordnung des ersten Einlasses 12 und des zweiten Einlasses 13 des Überlaufsammlers 6. Der zweite Einlass 13 dient als Überlauf für den Wannenbereich 2. Dahingegen dient der erste Einlass 12 als Überlauf für Flüssigkeit, die in das Innere des Überlaufsammlers 6 eingeleitet wurde. Der erste und der zweite Einlass 12, 13 münden beide in den zweiten Überlauf 11. Weiterhin ist der erste Einlass 12 auf gleicher Höhe wie ein Boden 16.

In einer nicht dargestellten Blocklagerelementanordnung sind wenigstens zwei Blocklagerelemente 1 übereinandergestapelt. Dabei ist ein erstes Blocklagerelement 1 oberhalb eines zweiten Blocklagerelementes 1 angeordnet. Die Stapelgeometrien 3 der jeweiligen Blocklagerelemente 1 sind lösbar im Eingriff miteinander. In dieser Anordnung ist die erste Flüssigkeitsführung 10 des zweiten Blocklagerelementes 1 unterhalb des ersten Überlaufs 9 des ersten Blocklagerelementes 1 angeordnet. Weiterhin ist die zweite Flüssigkeitsführung 15 des zweiten Blocklagerelementes 1 unterhalb des zweiten Überlaufs 11 des ersten Blocklagerelementes 1 angeordnet.

Frische Flüssigkeit wird in die erste Flüssigkeitsführung des ersten Blocklagerelementes 1 eingeleitet. Dort überführt die Flüssigkeitsführung die Flüssigkeit in den Überlaufverteiler, von wo aus zumindest ein Teil der Flüssigkeit durch die Durchgänge 8 in den Wannenbereich 2 gelangt. Durch die Durchgänge 8 wird die Flüssigkeit gedrosselt, so dass innerhalb des Überlaufverteilers 5 der Flüssigkeitsspiegel steigt. Sobald der Flüssigkeitsspiegel das obere Ende des ersten Überlaufs 9 erreicht, wird Flüssigkeit über den ersten Überlauf 9 abgeleitet. Der erste Überlauf 9 des ersten Blocklagerelementes 1 mündet in der ersten Flüssigkeitsführung 10 des zweiten Blocklagerelementes. Dort beginnt der Vorgang von Neuem.

Flüssigkeit, die ausgehend von dem Überlaufverteiler 5 in den Wannenbereich 2 gelangt ist, wird durch Verteilelemente 4 entlang des kompletten Wannenbereichs 2 verteilt. Dadurch wird der komplette Wannenbereich 2 mit frischer Flüssigkeit versorgt. Sobald der Wannenbereich 2 mit Flüssigkeit versorgt wurde, gelangt Flüssigkeit auch zu dem Überlaufsammler 6. Dort gelangt die nun verbrauchte Flüssigkeit durch den zweiten Einlass 13 des ersten Blocklagerelementes 1 in die zweite Flüssigkeitsführung 15 des zweiten Blocklagerelementes 1. Die zweite Flüssigkeitsführung 15 übergibt die verbrauchte Flüssigkeit in das Innere des Überlaufsammlers 6, von wo aus die Flüssigkeit durch den ersten Einlass 12 in den zweiten Überlauf 11 des zweiten Blocklagerelementes 1 überführt wird. Auch hier können beliebig viele Blocklagerelemente 1 übereinandergestapelt werden, so dass verbrauchte Flüssigkeit abgeführt werden kann.

Der Überlaufverteiler 5 in Kombination mit der ersten Flüssigkeitsführung 10 führen ausschließlich frische Flüssigkeit. Der Überlaufsammler 6 in Kombination mit der zweiten Flüssigkeitsführung 15 kümmern sich um verbrauchte Flüssigkeit. Dadurch ist frische Flüssigkeit von der verbrauchten Flüssigkeit getrennt. Dies ermöglicht eine gute Versorgung aller in der Blocklageranordnung befindlichen Blocklagerelemente 1.

### Bezugszeichenliste

- 1: Blocklagerelement
- 2: Wannenbereich
- 3: Stapelgeometrie
- 4: Verteilerelement
- 5: Überlaufverteiler
- 6: Überlaufsammler
- 7: Verteilerbegrenzung
- 8: Durchgang
- 9: erster Überlauf
- 10: erste Flüssigkeitsführung
- 11: zweiter Überlauf
- 12: erster Einlass
- 13: zweiter Einlass
- 14: Begrenzung
- 15: zweite Flüssigkeitsführung
- 16: Boden

## Patentansprüche

1. Verfahren zur Flüssigkeitsversorgung eines Blocklagerelementes (1) , wobei das Blocklagerelement (1) einen Überlauf (9) aufweist, wobei Flüssigkeit in einen Überlaufverteiler (5) mit einer Verteilerbegrenzung (7) eingeleitet wird, wobei der Überlauf (9) in dem Überlaufverteiler (5) angeordnet ist, wobei die Flüssigkeit durch wenigstens einen in der Verteilerbegrenzung (7) angeordneten Durchgang (8) gedrosselt in einen Wannenbereich (2) des Blocklagerelementes (1) gelangt, und Flüssigkeit, die nicht durch den wenigstens einen Durchgang (8) abgeführt wird durch den Überlauf (9) abgeleitet wird.

2. Verfahren nach Anspruch 1, **dadurch gekennzeichnet, dass** die durch den Überlauf (9) abgeleitete Flüssigkeit eines ersten Blocklagerelements (1) in eine Flüssigkeitsführung (10) eines unterhalb des ersten Blocklagerelements (1) angeordnetes zweites Blocklagerelementes (1) geleitet wird.

3. Verfahren nach Anspruch 1 oder 2, **dadurch gekennzeichnet, dass** der Überlauf (9) ein erster Überlauf (9) ist, und dass die von dem Überlaufverteiler (5) aus in das Blocklagerelement (1) eingebrachte Flüssigkeit durch einen zweiten Einlass (13) eines zweiten Überlaufs (11) eines Überlaufsammlers (6) abgeführt wird.

4. Verfahren nach einem der Ansprüche 1 bis 3, **dadurch gekennzeichnet, dass** die durch den zweiten Überlauf (11) abgeleitete Flüssigkeit eines ersten Blocklagerelements (1) in eine zweite Flüssigkeitsführung (15) eines unterhalb des ersten Blocklagerelements (1) angeordnetes zweites Blocklagerelementes (1) geleitet wird.

5. Verfahren nach einem der Ansprüche 1 bis 4, **dadurch gekennzeichnet, dass** die durch den zweiten Überlauf (11) eines des Blocklagerelements (1) in die zweite Flüssigkeitsführung (15) des unter dem ersten Blocklagerelement (1) angeordneten zweiten Blocklagerelement (1) eingeleitet Flüssigkeit durch einen ersten Einlass (12) des zweiten Überlaufs (11) in ein drittes Blocklagerelement (1) überführt wird, das in Schwerkraftrichtung unterhalb des zweiten Blocklagerelementes (1) angeordnet ist.

6. Blocklagerelement mit einem Wannenbereich und mit einem Überlauf,
wobei der Überlauf (9) in einem Überlaufverteiler (5) angeordnet ist, wobei der Überlaufverteiler (5) eine Verteilerbegrenzung (7) mit wenigstens einem Durchgang (8) zu dem Wannenbereich (2) aufweist, **dadurch gekennzeichnet, dass**
eine Gesamtquerschnittsfläche eines ersten Querschnitt des wenigstens einen Durchgangs (8) im Wesentlichen geringer ist als ein zweiter Querschnitt des Überlaufs (9).

7. Blocklagerelement nach Anspruch 6, **dadurch gekennzeichnet, dass** der wenigstens eine Durchgang (8) in Schwerkraftrichtung zumindest teilweise auf Höhe eines oberen Endes des Überlaufs (9) und/oder in Schwerkraftrichtung zumindest teilweise unterhalb des oberen Ende des Überlaufs (9) angeordnet ist.

8. Blocklagerelement nach Anspruch 6 oder 7, **dadurch gekennzeichnet, dass** der Überlaufverteiler (5) in einem Eckbereich des Wannenbereiches (2) des Blocklagerelementes (1) angeordnet ist.

9. Blocklagerelement nach einem der Ansprüche 6 bis 8, **dadurch gekennzeichnet, dass** der Überlaufverteiler (5) eine Flüssigkeitsführung (10) aufweist, deren unteres Ende in Schwerkraftrichtung unterhalb des oberen Endes des Überlaufs (9) angeordnet ist.

10. Blocklagerelement nach einem der Ansprüche 6 bis 9, **dadurch gekennzeichnet, dass** der Überlauf (9) ein erster Überlauf (9) ist, und dass das Blocklagerelement (1) einen zweiten Überlauf (11) mit einem ersten Einlass (12) und einem zweiten (13) Einlass aufweist, wobei der erste Einlass (12) mit dem Inneren eines Überlaufsammlers (6) zusammenwirkt und der zweite Einlass (13) mit einem Äußeren des Überlaufsammlers (6) zusammenwirkt.

11. Blocklagerelement nach Anspruch 10, **dadurch gekennzeichnet, dass** die Flüssigkeitsführung (10) einer erste Flüssigkeitsführung (10) ist, und dass eine zweite Flüssigkeitsführung (15) mit dem Inneren des Überlaufsammlers (6) zusammenwirkt.

12. Blocklagerelement nach Anspruch 10 oder 11, **dadurch gekennzeichnet, dass** der zweite Einlass (13) in Schwerkraftrichtung oberhalb des ersten Einlasses (12) angeordnet ist.

13. Blocklagerelement nach einem der Ansprüche 11 bis 12, **dadurch gekennzeichnet, dass** ein in Schwerkraftrichtung oberes Ende des ersten Einlasses (12) auf gleicher Höhe wie der Boden (16) des Überlaufsammlers (6).

14. Blocklagerelement nach einem der Ansprüche 6 bis 13, **dadurch gekennzeichnet, dass** der Eckbereich ein erster Eckbereich ist, und dass der Überlaufsammler (6) mit dem zweiten Überlauf (11) in einem zweiten Eckbereich angeordnet ist, der sich vom ersten Eckbereich unterscheidet.

15. Blocklagerelementanordnung mit wenigstens einem Blocklagerelement nach einem der Ansprüche 6 bis 14, **dadurch gekennzeichnet, dass** ein erstes Blocklagerelement (1) in Schwerkraftrichtung oberhalb eines zweiten Blocklagerelements (1) angeordnet ist, wobei der erste Überlauf (9) des ersten Blocklagerelements (1) oberhalb der ersten Flüssigkeitsführung (10) des zweiten Blocklagerelements (1) angeordnet ist und/oder der zweite Überlauf (11) des ersten Blocklagerelements (1) oberhalb der zweiten Flüssigkeitsführung (15) des zweiten Blocklagerelements (1) angeordnet ist.

## Claims

1. Method for supplying liquid to a block storage element (1), wherein the block storage element (1) has an overflow (9), wherein liquid is introduced into an overflow distributor (5) with a distributor limit (7), wherein the overflow (9) is arranged in the overflow distributor (5), wherein the fluid is throttled through at least one passage (8) arranged in the distributor limit (7) and enters a tub area (2) of the block storage element (1), and fluid that is not discharged through the at least one passage (8) is diverted through the overflow (9).

2. Method according to claim 1, **characterized in that** the liquid discharged through the overflow (9) of a first block storage element (1) is directed into a liquid conduit (10) of a second block storage element (1) arranged below the first block storage element (1).

3. Method according to claim 1 or 2, **characterized in that** the overflow (9) is a first overflow (9) and that the liquid introduced into the block storage element (1) from the overflow distributor (5) is discharged through a second inlet (13) of a second overflow (11) of an overflow collector (6).

4. Method according to one of claims 1 to 3, **characterized in that** the liquid of a first block storage element (1) discharged through the second overflow (11) is fed into a second liquid conduit (15) of a second block storage element (1) arranged below the first block storage element (1).

5. Method according to one of claims 1 to 4, **characterized in that** the fluid discharged through the second overflow (11) of one of the block storage elements (1) into the second fluid conduit (15) of the second block storage element (1) arranged below the first block storage element (1) is transferred through a first inlet (12) of the second overflow (11) into a third block storage element (1) which is arranged below the second block storage element (1) in the direction of gravity.

6. Block storage element with a tub area and an overflow, wherein the overflow (9) is arranged in an overflow distributor (5), wherein the overflow distributor (5) has a distributor limit (7) with at least one passage (8) to the tub area (2), **characterized in that** a total cross-sectional area of a first cross-section of the at least one passage (8) is substantially smaller than a second cross-section of the overflow (9).

7. Block storage element according to claim 6, **characterized in that** the at least one passage (8) is arranged in the direction of gravity at least partially at the level of an upper end of the overflow (9) and/or in the direction of gravity at least partially below the upper end of the overflow (9).

8. Block storage element according to claim 6 or 7, **characterized in that** the overflow distributor (5) is arranged in a corner area of the tub area (2) of the block storage element (1).

9. Block storage element according to one of claims 6 to 8, **characterized in that** the overflow distributor (5) has a liquid guide (10) whose lower end is arranged below the upper end of the overflow (9) in the direction of gravity.

10. Block storage element according to one of claims 6 to 9, **characterized in that** the overflow (9) is a first overflow (9) and that the block storage element (1) has a second overflow (11) with a first inlet (12) and a second (13) inlet, wherein the first inlet (12) cooperates with the interior of an overflow collector (6) and the second inlet (13) cooperates with an exterior of the overflow collector (6).

11. Block storage element according to claim 10, **characterized in that** the fluid conduit (10) is a first fluid conduit (10), and **in that** a second fluid conduit (15) cooperates with the interior of the overflow collector (6).

12. Block storage element according to claim 10 or 11, **characterized in that** the second inlet (13) is arranged above the first inlet (12) in the direction of gravity.

13. Block storage element according to one of claims 11 to 12, **characterized in that** an upper end of the first inlet (12) in the direction of gravity is at the same height as the bottom (16) of the overflow collector (6).

14. Block storage element according to one of claims 6 to 13, **characterized in that** the corner area is a first corner area, and that the overflow collector (6) with the second overflow (11) is arranged in a second corner area that differs from the first corner area.

15. Block storage element arrangement with at least one block storage element according to one of claims 6 to 14, **characterized in that** a first block storage element (1) is arranged above a second block storage element (1) in the direction of gravity, wherein the first overflow (9) of the first block storage element (1) is arranged above the first fluid conduit (10) of the second block bearing element (1) and/or the second overflow (11) of the first block bearing element (1) is arranged above the second fluid conduit (15) of the second block bearing element (1).

## Revendications

1. Procédé d'alimentation en liquide d'un élément d'entreposage en blocs (1), sachant que l'élément d'entreposage en blocs (1) comporte un trop-plein (9), sachant que du liquide est introduit dans un répartiteur de trop-plein (5) avec une limite de répartition (7), sachant que le trop-plein (9) est disposé dans le répartiteur de trop-plein (5), sachant que le liquide réduit par au moins un passage (8) disposé dans la limitation de répartiteur (7) parvient dans une zone de cuve (2) de l'élément d'entreposage en blocs (1) et le liquide, qui n'est pas évacué par au moins un passage (8), est dérivé par le trop-plein (9).

2. Procédé selon la revendication 1, **caractérisé en ce que** le liquide dévié par le trop-plein (9) d'un premier élément d'entreposage en blocs (1) est dirigé dans un conduit de liquide (10) d'un deuxième élément d'entreposage en blocs (1) disposé en dessous du premier élément d'entreposage en blocs (1).

3. Procédé selon la revendication 1 ou 2, **caractérisé en ce que** le trop-plein (9) est un premier trop-plein (9) et **en ce que** le liquide introduit du répartiteur de trop-plein (5) dans l'élément d'entreposage en blocs (1) est évacué par une deuxième entrée (13) d'un deuxième trop-plein (11) d'un collecteur de trop-plein (6).

4. Procédé selon l'une quelconque des revendications 1 à 3, **caractérisé en ce que** le liquide dévié par le deuxième trop-plein (11) d'un premier élément d'entreposage en blocs (1) est dirigé dans un deuxième conduit de liquide (15) d'un deuxième élément d'entreposage en blocs (1) disposé en dessous du premier élément d'entreposage en blocs (1).

5. Procédé selon l'une quelconque des revendications 1 à 4, **caractérisé en ce que** le liquide introduit par le deuxième trop-plein (11) d'un élément d'entreposage en blocs (1) dans le deuxième conduit de liquide (15) du deuxième élément d'entreposage en blocs (1) disposé sous le premier élément d'entreposage en blocs (1) est transféré par une première entrée (12) du deuxième trop-plein (11) dans un troisième élément d'entreposage en blocs (1), qui est disposé dans le sens de gravité en dessous du deuxième élément d'entreposage en blocs (1).

6. Elément d'entreposage en blocs avec une zone de cuve et avec un trop-plein, sachant que le trop-plein (9) est disposé dans un répartiteur de trop-plein (5), sachant que le répartiteur de trop-plein (5) comporte une limitation de répartiteur (7) avec au moins un passage (8) vers la zone de cuve (2), **caractérisé en ce qu'**une surface de section complète d'une première section d'au moins un passage (8) est pour l'essentiel plus faible qu'une deuxième section de trop-plein (9).

7. Elément d'entreposage en blocs selon la revendication 6, **caractérisé en ce qu'**au moins un passage (8) est disposé dans le sens de gravité au moins en partie à hauteur d'une extrémité supérieure du trop-plein (9) et/ou dans le sens de gravité au moins en partie en dessous de l'extrémité supérieure du trop-plein (9).

8. Elément d'entreposage en blocs selon la revendication 6 ou 7, **caractérisé en ce que** le répartiteur de trop-plein (5) est disposé dans une zone d'angle de la zone de cuve (2) de l'élément d'entreposage en blocs (1).

9. Elément d'entreposage en blocs selon l'une quelconque des revendications 6 à 8, **caractérisé en ce que** le répartiteur de trop-plein (5) comporte un conduit de liquide (10), dont l'extrémité inférieure est disposée dans le sens de gravité en dessous de l'extrémité supérieure du trop-plein (9).

10. Elément d'entreposage en blocs selon l'une quelconque des revendications 6 à 9, **caractérisé en ce que** le trop-plein (9) est un premier trop-plein (9), et **en ce que** l'élément d'entreposage en blocs (1) comporte un deuxième trop-plein (11) avec une première entrée (12) et une deuxième entrée (13), sachant que la première entrée (12) coopère avec l'intérieur d'un collecteur de trop-plein (6) et la deuxième entrée (13) coopère avec un extérieur du collecteur de trop-plein (6).

11. Elément d'entreposage en blocs selon la revendication 10, **caractérisé en ce que** le conduit de liquide (10) est un premier conduit de liquide (10), et **en ce qu'**un deuxième conduit de liquide (15) coopère avec l'intérieur du collecteur de trop-plein (6).

12. Elément d'entreposage en blocs selon la revendication 10 ou 11, **caractérisé en ce que** la deuxième entrée (13) est disposée dans le sens de la gravité au-dessus de la première entrée (12).

13. Elément d'entreposage en blocs selon l'une quelconque des revendications 11 à 12, **caractérisé en ce qu'**une extrémité supérieure dans le sens de la gravité de la première entrée (12) est à la même hauteur que le fond (16) du collecteur de trop-plein (6).

14. Elément d'entreposage en blocs selon l'une quelconque des revendications 6 à 13, **caractérisé en ce que** la zone d'angle est une première zone d'angle et **en ce que** le collecteur de trop-plein (6) est disposé avec le deuxième trop-plein (11) dans une deuxième zone d'angle, qui se différencie de la première zone d'angle.

15. Agencement d'élément d'entreposage en blocs avec au moins un élément d'entreposage en blocs selon l'une quelconque des revendications 6 à 14, **caractérisé en ce qu'**un premier élément d'entreposage en blocs (1) est disposé dans le sens de la gravité au-dessus d'un deuxième élément d'entreposage en blocs (1), sachant que le premier trop-plein (9) du premier élément d'entreposage en blocs (1) est disposé au-dessus du premier conduit de liquide (10) du deuxième élément d'entreposage en blocs (1) et/ou le deuxième trop-plein (11) du premier élément d'entreposage en blocs (1) est disposé au-dessus du deuxième conduit de liquide (15) du deuxième élément d'entreposage en blocs (1).
